# EUROPEAN PATENT APPLICATION

(11) **EP 4 439 800 A1**
(43) Date of publication of application: **02.10.2024**
(21) Application number: 24167841.6
(22) Date of filing: 29.03.2024
(51) Int. Cl.: H01M 10/615, H01M 10/6551, H01M 10/657

(54) **HEATING DEVICE, ELECTROCHEMICAL DEVICE, AND ELECTRICAL DEVICE**

(30) Priority: 31.03.2023 CN 202310341662
(71) Applicant: Xiamen Ampack Technology Limited, Xiamen City, Fujian Province 361000 (CN)
(72) Inventor: PENG, Fanggui, Xiamen City, Fujian Province, People s Republic of China, 361000 (CN); WU, Mingjie, Xiamen City, Fujian Province, People s Republic of China, 361000 (CN); NONG, Wenbin, Xiamen City, Fujian Province, People s Republic of China, 361000 (CN)
(74) Representative: Icosa

(57) **Abstract**

A heating device (10) includes at least two heat emitting bodies (11), at least one conductive portion (12), and a insulator (13). The plurality of heat emitting bodies (11) are spaced apart along a first direction (X), with a clearance (14) existent between two adjacent heat emitting bodies (11). The two adjacent heat emitting bodies (11) are connected by the conductive portion (12). The conductive portion (12) is separate from the clearance (14). The insulator (13) overlays at least a part of a surface of the heat emitting body (11). In the heating device (10), a plurality of heat emitting bodies (11) are spaced apart along the first direction (X), and a clearance (14) is formed, thereby facilitating bending and deformation of the heating device (10) in a clearance (14) region between the adjacent heat emitting bodies (11). The conductive portion (12) that connects the two adjacent heat emitting bodies (11) is separate from the clearance (14).

## Description

### TECHNICAL FIELD

This application relates to the field of battery technology, and in particular to a heating device, an electrochemical device, and an electrical device.

### BACKGROUND

Currently, with the booming development of the new energy industry, the application environment of electrochemical devices is becoming increasingly complicated. When an electrochemical device is in a low-temperature environment, the low temperature affects the charge-discharge performance of the electrochemical device. To alleviate the adverse effect of the low temperature on the electrochemical device, a heating device is usually disposed between different battery cells in the electrochemical device to regulate the temperature of the battery cells. The heating device device is usually not easy to bend, and is not convenient to assemble.

### SUMMARY

In view of the above situation, it is necessary to provide a heating device to facilitate bending and improve the assembling efficiency of an electrochemical device containing the heating device.

An embodiment of this application provides a heating device. The heating device includes at least two heat emitting bodies, at least one conductive portion, and an insulator. The plurality of heat emitting bodies are spaced apart along a first direction, with a clearance provided between two adjacent heat emitting bodies. The two adjacent heat emitting bodies are connected by the conductive portion. The conductive portion is separate from the clearance. The insulator overlays at least a part of a surface of each heat emitting body.

In the heating device, a plurality of heat emitting bodies are spaced apart along the first direction, and a clearance is formed, thereby facilitating bending and deformation of the heating device in a clearance region between the adjacent heat emitting bodies. The conductive portion that connects the two adjacent heat emitting bodies is separate from the clearance. Therefore, in assembling the heating device into the electrochemical device, the conductive portion can be separated from the main portion of the battery cell, thereby further facilitating the bending and deformation of the heating device, and improving the assembling efficiency of the electrochemical device.

In some embodiments of this application, the two adjacent heat emitting bodies are connected by an insulating connecting portion, and the insulating connecting portion is located between the two adjacent heat emitting bodies. The insulating connecting portion improves the stability of connection between the adjacent heat emitting bodies, and reduces the risk of damage to the heating device.

In some embodiments of this application, the insulating connecting portion is disposed on the insulator.

In some embodiments of this application, the insulating connecting portion and the insulator are formed in one piece, thereby simplifying the assembling process of the heating device and improving the processing and manufacturing efficiency of the heating device.

In some embodiments of this application, the insulator includes a first insulator. The first insulator overlays an entire surface of the each heat emitting body, thereby reducing the risk that the heat emitting bodies are damaged by a foreign object, and reducing the risk of a short circuit of the heating device.

In some embodiments of this application, the insulator includes a second insulator. The second insulator overlays an entire surface of the conductive portion, thereby reducing the risk that the conductive portion is damaged by a foreign object, and reducing the risk of a short circuit of the heating device.

In some embodiments of this application, the first insulator and the second insulator are formed in one piece, thereby further simplifying the assembling process of the heating device and improving the processing and manufacturing efficiency of the heating device.

An embodiment of this application further provides an electrochemical device. The electrochemical device includes a cell assembly and the heating device disclosed in any one of the foregoing embodiments. The heating device is connected to the cell assembly.

In the electrochemical device, a plurality of heat emitting bodies in the heating device are spaced apart along the first direction, and a clearance is formed, thereby facilitating bending and deformation of the heating device in a clearance region between the adjacent heat emitting bodies. The conductive portion that connects the two adjacent heat emitting bodies is separate from the clearance, thereby further facilitating the bending and deformation of the heating device, and improving the assembling efficiency of the electrochemical device.

In some embodiments of this application, the cell assembly includes a plurality of battery cells. Each of the battery cells includes a housing, an electrode assembly, and an electrode terminal. A part of the electrode terminal is located in the housing and connected to the electrode assembly. A part of the electrode terminal extends out of the housing. The housing includes a main portion. The electrode assembly is accommodated in the main portion.

In some embodiments of this application, the heat emitting bodies are connected to the main portion. The heat emitting bodies can heat the main portion to improve the charge-and-discharge performance of the battery cell.

In some embodiments of this application, the conductive portion is separate from the main portion. The conductive portion is bent against the heat emitting bodies, so that the heating device is bent at the conductive portion and the clearance region. In this way, a part of the heat emitting bodies is connected between adjacent battery cells, so as to heat the battery cells. At the same time, the heating device is bent at the clearance region, so that the clearance region is located on a lateral side of the battery cells, thereby reducing the risk of overheating of the heat emitting bodies.

In some embodiments of this application, the battery cell further includes a sealing portion that extends from the main portion. The electrode terminal extends out of the main portion from the sealing portion. A plurality of battery cells are stacked together. Along a stacking direction of the plurality of battery cells, a part of at least one heat emitting body is located between adjacent main portions. The heat emitting bodies can heat the two main portions simultaneously, thereby improving the charge-discharge performance of the two adjacent battery cells.

In some embodiments of this application, a part of at least one conductive portion is located between adjacent sealing portions, thereby reducing the impact caused by the expansion and deformation of the battery cell onto the conductive portion, and reducing the risk of damage to the heating device caused by the expansion of the battery cell.

In some embodiments of this application, the heating device further includes a first connecting end and a second connecting end. The first connecting end is electrically connected to the heat emitting bodies. The second connecting end is electrically connected to the heat emitting bodies. The first connecting end and the second connecting end are configured to be electrically connected to a power supply to provide electrical energy for the heat emitting bodies.

In some embodiments of this application, the heating device further includes a control switch. The control switch is connected to the first connecting end or the second connecting end. The control switch is configured to detect a temperature of the electrode terminal, thereby reducing the risk of thermal runaway of the battery cell.

In some embodiments of this application, along the stacking direction of the plurality of battery cells, the control switch is connected to an electrode terminal on an outermost battery cell, thereby reducing the risk of thermal runaway of the battery cell.

In some embodiments of this application, the electrochemical device further includes a third insulator. The third insulator includes a bottom wall and a plurality of sidewalls. The sidewalls are connected to the bottom wall. The bottom wall and the plurality of sidewalls form an accommodation cavity. An opening of the accommodation cavity is facing toward the main portion. A part, extending out of the sealing portion, of the electrode terminal, is located in the accommodation cavity, thereby reducing the risk of damage to the electrode terminal.

In some embodiments of this application, a first snap slot is disposed on a side of the sidewalls, the side being facing away from the accommodation cavity. The heating device further includes a first connecting end connected to the heat emitting bodies. The first connecting end is disposed in the first snap slot and extends to a side of the bottom wall, the side being facing away from the main portion. The first snap slot serves to fix and constrain the first connecting end, thereby reducing the risk of damage caused by a wobble of the first connecting end.

In some embodiments of this application, the electrochemical device further includes a first circuit board. The first connecting end is connected to the first circuit board. The first circuit board is configured to be able to provide a path of electrical energy to the heating device.

In some embodiments of this application, the electrochemical device further includes a main positive connecting portion and a main negative connecting portion. The main positive connecting portion connects the cell assembly and the first circuit board. The main negative connecting portion connects the cell assembly and the first circuit board. In this way, the first circuit board is electrically connected to the cell assembly, and can control charging and discharging of the cell assembly.

In some embodiments of this application, the electrochemical device further includes a second circuit board. The second circuit board is disposed in the accommodation cavity, and connected to the electrode terminal. The second circuit board is configured to obtain electrical signal information of the battery cell.

An embodiment of this application further provides an electrical device, including the electrochemical device according to any one of the foregoing embodiments.

In the electrical device, a plurality of heat emitting bodies in the heating device in the electrochemical device are spaced apart along the first direction, and a clearance is formed, thereby facilitating bending and deformation of the heating device in a clearance region between the adjacent heat emitting bodies. The conductive portion that connects the two adjacent heat emitting bodies is separate from the clearance, thereby further facilitating the bending and deformation of the heating device, improving the assembling efficiency of the electrochemical device, saving the manufacturing cost of the electrochemical device, and reducing the impact caused by the cost of the electrochemical device onto the electrical device.

### BRIEF DESCRIPTION OF DRAWINGS

FIG. 1 is a schematic structural diagram of a heating device according to an embodiment of this application;
FIG. 2 is a cross-sectional view of a heating device sectioned along a direction perpendicular to a third direction according to an embodiment of this application;
FIG. 3 is a cross-sectional view of sectioning along a line III-III shown in FIG. 1 according to an embodiment of this application;
FIG. 4 is a schematic structural diagram of an electrochemical device according to an embodiment of this application;
FIG. 5 is a cross-sectional view of sectioning along a line V-V shown in FIG. 4 according to an embodiment of this application;
FIG. 6 is an exploded view of an electrochemical device according to an embodiment of this application;
FIG. 7 is a schematic structural diagram of a heating device connected to a cell assembly according to an embodiment of this application;

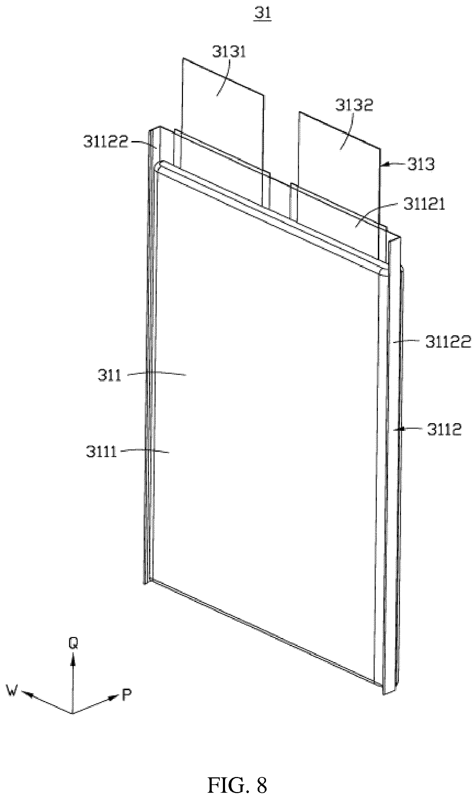

FIG. 8 is a schematic structural diagram of a battery cell according to an embodiment of this application;

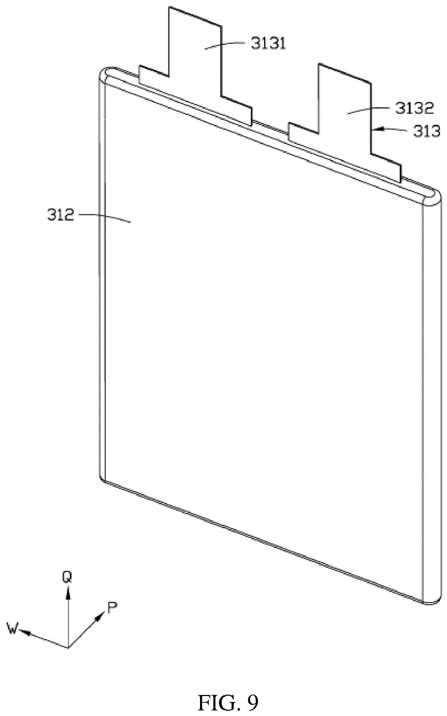

FIG. 9 is a schematic structural diagram of an electrode assembly according to an embodiment of this application;
FIG. 10 is a schematic structural diagram of a part of an electrochemical device according to an embodiment of this application;
FIG. 11 is a close-up view of an XI region shown in FIG. 10;
FIG. 12 is a schematic structural diagram of a third insulator according to an embodiment of this application;
FIG. 13 is another view of a third insulator according to an embodiment of this application;
FIG. 14 is a structural view of a part of an electrochemical device viewed along a sixth direction according to an embodiment of this application;
FIG. 15 is a close-up view of an XV region shown in FIG. 14;
FIG. 16 is a cross-sectional view of an electrochemical device sectioned along a direction perpendicular to a fifth direction according to an embodiment of this application;
FIG. 17 is a close-up view of an XVII region shown in FIG. 16; and
FIG. 18 is a schematic structural diagram of an electrical device according to an embodiment of this application.

List of reference numerals:
electrochemical device 100
heating device 10
heat emitting body 11
first region 111
second region 112
conductive portion 12
insulator 13
first insulator 131
second insulator 132
clearance 14
insulating connecting portion 15
first insulating portion 151
second insulating portion 152
first connecting end 16
second connecting end 17
control switch 18
shell 20
first wall 21
first groove 211
second groove 212
second wall 22
third wall 23
fourth wall 24
fifth wall 25
sixth wall 26
cell assembly 30
battery cell 31
housing 311
main portion 3111
sealing portion3112
top seal portion 31121
side seal portion 31122
electrode assembly 312
electrode terminal 313
positive electrode terminal 3131
negative electrode terminal 3132
first circuit board 41
second circuit board 42
third insulator 50
bottom wall 51
first through-hole 511
second through-hole 512
third through-hole 513
first sidewall 52
first snap slot 521
second snap slot 522
second sidewall 53
third sidewall 54
fourth sidewall 55
accommodation cavity 56
main positive connecting portion 61
main negative connecting portion 62
harness 70
electrical device 200
first direction X
second direction Y
third direction Z
fourth direction P
fifth direction Q
sixth direction W

This application is further described below with reference to the following specific some embodiments and the foregoing drawings.

### DETAILED DESCRIPTION OF EMBODIMENTS

The following describes the technical solutions in some embodiments of this application with reference to the drawings hereto. Evidently, the described some embodiments are merely a part of but not all embodiments of this application.

It is hereby noted that a component considered to be "connected to" another component may be directly connected to the other component or may be connected to the other component through an intermediate component. A component considered to be "disposed on" another component may be directly disposed on the other component or may be disposed on the other component through an intermediate component. In this application, unless otherwise expressly specified and qualified, the terms such as "mount", "concatenate", "connect", and "fix" are generic in a broad sense, for example, mean a fixed connection, a detachable connection, or a one-piece configuration; or mean a mechanical connection or electrical connection; or mean a direct connection or indirect connection implemented through an intermediary; or mean internal communication between two components. A person of ordinary skill in the art is able to understand the specific meanings of the terms in this application according to specific situations. The term "and/or" used herein includes any and all combinations of one or more relevant items enumerated.

Unless otherwise defined, all technical and scientific terms used herein bear the same meanings as what is normally understood by a person skilled in the technical field of this application. The terms used in the specification of this application are merely intended to describe specific some embodiments but not to limit this application. The terms "include" and "contain" and any variations thereof used in the specification, claims, and brief description of drawings of this application are intended to cover a non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. To the extent that no conflict occurs, different embodiments of this application may be combined with each other.

It is hereby noted that, dimensions such as thickness, length, and width of various components in some embodiments of this application shown in the drawings, and dimensions such as overall thickness, length, and width of an integrated device are merely illustrative descriptions, but do not constitute any limitation on this application.

An embodiment of this application provides a heating device. The heating device includes at least two heat emitting bodies, at least one conductive portion, and a first insulator. The plurality of heat emitting bodies are spaced apart along a first direction, with a clearance provided between two adjacent heat emitting bodies. The two adjacent heat emitting bodies are connected by the conductive portion. The conductive portion is separate from the clearance. The insulator overlays at least a part of a surface of each heat emitting body.

In the heating device, a plurality of heat emitting bodies are spaced apart along the first direction, and a clearance is formed, thereby facilitating bending and deformation of the heating device in a clearance region between the adjacent heat emitting bodies. The conductive portion that connects the two adjacent heat emitting bodies is separate from the clearance. Therefore, in assembling the heating device into the electrochemical device, the conductive portion can be separated from the main portion of the battery cell, thereby further facilitating the bending and deformation of the heating device, and improving the assembling efficiency of the electrochemical device.

The following further describes some embodiments of this application with reference to drawings.

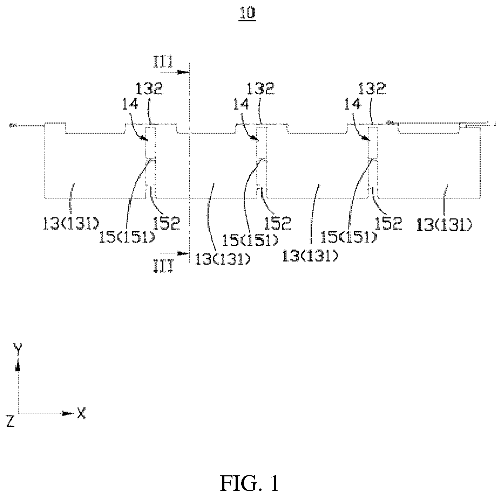

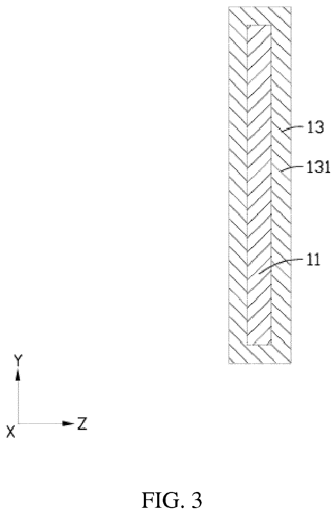

As shown in FIG. 1 to FIG. 3, an embodiment of this application provides a heating device 10, including at least two heat emitting bodies 11, at least one conductive portion 12, and an insulator 13. The plurality of heat emitting bodies 11 are spaced apart along a first direction X, with a clearance 14 provided between two adjacent heat emitting bodies 11. The two adjacent heat emitting bodies 11 are connected by the conductive portion 12. The conductive portion 12 is separate from the clearance 14. The insulator 13 overlays at least a part of the surface of the heat emitting body 11.

In the heating device 10, a plurality of heat emitting bodies 11 are spaced apart along the first direction X, and a clearance 14 is formed, thereby facilitating bending and deformation of the heating device 10 in a clearance 14 region between the adjacent heat emitting bodies 11. The conductive portion 12 that connects the two adjacent heat emitting bodies 11 is separate from the clearance 14. Therefore, in assembling the heating device 10 into the electrochemical device 100, the conductive portion 12 can be separated from the main portion 3111 of the battery cell 31, thereby further facilitating the bending and deformation of the heating device 10, and improving the assembling efficiency of the electrochemical device 100.

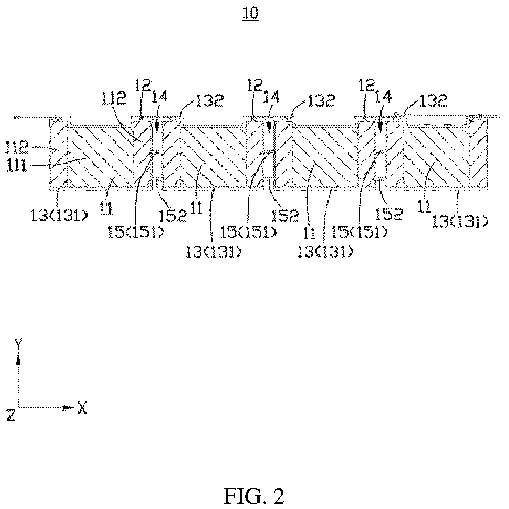

FIG. 1 is a schematic diagram of a heating device 10 before bending; and FIG. 2 is a schematic diagram of the heating device 10 before bending. For ease of illustration, the heat emitting bodies 11 and the conductive portions 12 are filled with oblique lines.

In an embodiment, along the second direction Y, at least a part of the conductive portion 12 extends beyond the heat emitting body 11. In assembling the heating device 10 into the electrochemical device 100, the heat emitting body 11 can be made to be located between the main portions 3111 of adjacent battery cells 31. The conductive portion 12 extends out of the main portion 3111, thereby making it convenient for the heat emitting body 11 to heat the battery cell 31, and also making it convenient for the conductive portion 12 to bend and deform, thereby improving the assembling efficiency of the electrochemical device 100. The second direction Y is perpendicular to the first direction X.

In an embodiment, the insulator 13 includes a first insulator 131. The first insulator 131 overlays an entire surface of the each heat emitting body 11. The first insulator 131 serves an insulating and protective function, reduces the risk that the heat emitting bodies 11 are damaged by a foreign object, and reduces the risk of a short circuit of the heating device 10.

In an embodiment, the first insulator 131 is formed on the surface of the heat emitting body 11 by melting plastic in injection molding equipment and then curing the plastic, thereby simplifying the process of connecting the first insulator 131 to the heat emitting body 11, improving the assembling efficiency, improving the stability of connection between the first insulator 131 and the heat emitting body 11, reducing the risk of detachment of the first insulator 131 from the heat emitting body 11, controlling the thickness of the first insulator 131, and reducing the impact caused by the thickness of the first insulator 131 on the heating effect of the heating device 10.

In an embodiment, the first insulator 131 is applied onto the surface of the heat emitting body 11, thereby improving the stability of connection between the first insulator 131 and the heat emitting body 11, and reducing the risk of detachment of the first insulator 131 from the heat emitting body 11.

In an embodiment, the first insulator 131 is formed by applying highly thermally-conductive insulation adhesive onto the surface of the heat emitting body 11 and then curing the adhesive, thereby further improving the stability of connection between the first insulator 131 and the heat emitting body 11, and reducing the risk of detachment of the first insulator 131 from the heat emitting body 11.

In an embodiment, the first insulator 131 includes an insulation film. The insulation film overlays the entire surface of the heat emitting body 11.

In an embodiment, the first insulator 131 includes, but is not limited to, any one of silicone-based thermal adhesive, epoxy resin AB adhesive, polyurethane adhesive, polyurethane thermally and electrically conductive adhesive, or silicone-based thermal grease.

In an embodiment, the insulator 13 further includes a second insulator 132. The second insulator 132 overlays an entire surface of a conductive portion 12. The second insulator 132 serves an insulating and protective function, reduces the risk that the conductive portion 12 is damaged by a foreign object, and reduces the risk of a short circuit of the heating device 10.

In an embodiment, the second insulator 132 is formed on the surface of the conductive portion 12 by melting plastic in injection molding equipment and then curing the plastic, thereby simplifying the process of connecting the second insulator 132 to the conductive portion 12, improving the assembling efficiency, improving the stability of connection between the second insulator 132 and the conductive portion 12, reducing the risk of detachment of the second insulator 132 from the conductive portion 12, controlling the thickness of the second insulator 132, and reducing the impact caused by the thickness of the second insulator 132 on the bending efficiency of the conductive portion 12.

In an embodiment, the second insulator 132 is applied onto the surface of the conductive portion 12, thereby improving the stability of connection between the second insulator 132 and the conductive portion 12, and reducing the risk of detachment of the second insulator 132 from the conductive portion 12.

In an embodiment, the second insulator 132 is formed by applying highly thermally-conductive insulation adhesive onto the surface of the conductive portion 12 and then curing the adhesive, thereby further improving the stability of connection between the second insulator 132 and the conductive portion 12, and reducing the risk of detachment of the second insulator 132 from the conductive portion 12.

In an embodiment, the second insulator 132 includes an insulation film. The insulation film overlays the entire surface of the conductive portion 12.

In an embodiment, the second insulator 132 includes, but is not limited to, any one of silicone-based thermal adhesive, epoxy resin AB adhesive, polyurethane adhesive, polyurethane thermally and electrically conductive adhesive, or silicone-based thermal grease.

In an embodiment, the first insulator 131 and the second insulator 132 are formed in one piece, thereby further simplifying the assembling process of the heating device 10 and improving the processing and manufacturing efficiency of the heating device 10.

In an embodiment, the first insulator 131 and the second insulator 132 are an insulation film formed in one piece.

In an embodiment, the heating device 10 further includes at least one insulating connecting portion 15. At least a part of the insulating connecting portion 15 is located between the two adjacent heat emitting bodies 11, and connects the two adjacent heat emitting bodies 11. The insulating connecting portion 15 improves the stability of connection between the adjacent heat emitting bodies 11, and reduces the risk of damage to the heating device 10.

In an embodiment, the insulating connecting portion 15 is disposed on the first insulator 131. For example, the insulating connecting portion 15 is bonded to the first insulator 131.

In an embodiment, the insulating connecting portion 15 and the first insulator 131 are formed in one piece, thereby simplifying the assembling process of the heating device 10 and improving the processing and manufacturing efficiency of the heating device 10.

In an embodiment, the insulating connecting portion 15 includes a first insulating portion 151. The first insulating portion 151 and the conductive portion 12 are separate from each other and arranged along a second direction Y. At least a part of the clearance 14 is disposed between the first insulating portion 151 and the conductive portion 12.

In an embodiment, the insulating connecting portion 15 further includes a second insulating portion 152. Viewed along the first direction X, the second insulating portion 152 and the first insulating portion 151 are separate from each other and arranged along the second direction Y. The second insulating portion 152 disposed further improves the stability of connection between the adjacent heat emitting bodies 11, and reduces the risk of damage to the heating device 10.

In an embodiment, a part of the clearance 14 is located between the first insulating portion 151 and the second insulating portion 152.

In an embodiment, the heat emitting body 11 includes a first region 111 and a second region 112. The first region 111 and the second region 112 are arranged along the first direction X. The heating power differs between the first region 111 and the second region 112. When operating in the electrochemical device 100, the heating device 10 can heat different positions of the battery cell 31 separately through the first region 111 and the second region 112. The heating power differs between the two regions, so as to reduce the temperature difference between different positions of the battery cell 31. The heating power of the first region 111 is an average heating power, and the heating power of the second region 112 is an average heating power. The average heating power is calculated by dividing the sum of heating powers of all unit areas by the sum of all the unit areas.

In an embodiment, along the first direction X, the first region 111 is closer to the center position of the heat emitting body 11 than the second region 112, and the heating power of the first region 111 is greater than the heating power of the second region 112. When operating in the electrochemical device 100, the heating device 10 heats up the center of the battery cell 31 through the first region 111, and heats up the edge part of the battery cell 31 through the second region 112, thereby facilitating uniform heating of all parts of the battery cell 31, and reducing the temperature difference between different parts of the battery cell 31.

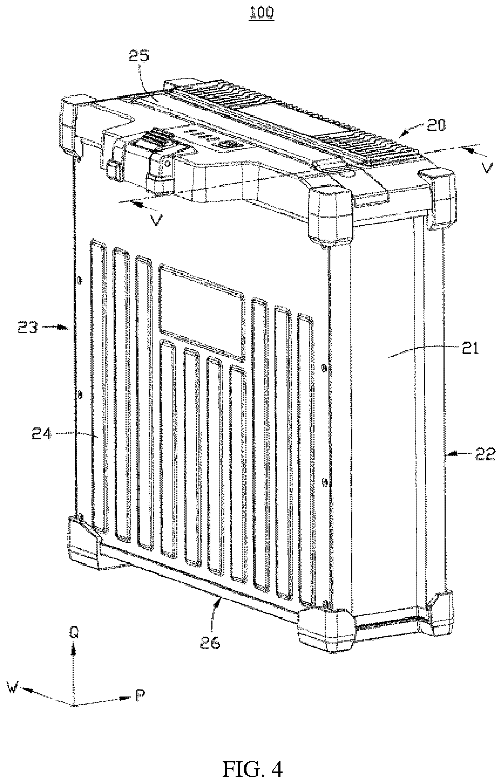

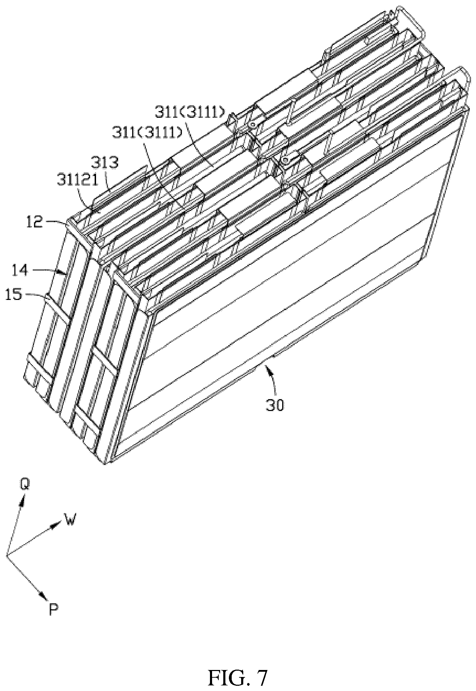

As shown in FIG. 4 to FIG. 7, an embodiment of this application further provides an electrochemical device 100. The electrochemical device includes a shell 20, a cell assembly 30, and the heating device 10 disclosed in any one of the foregoing embodiments. The cell assembly 30 and the heating device 10 are disposed in the shell 20. The heating device 10 is connected to the cell assembly 30.

In the electrochemical device 100, a plurality of heat emitting bodies 11 in the heating device 10 are spaced apart along the first direction X, and a clearance 14 is formed, thereby facilitating bending and deformation of the heating device 10 in a clearance 14 region between the adjacent heat emitting bodies 11. The conductive portion 12 that connects the two adjacent heat emitting bodies 11 is separate from the clearance 14, thereby further facilitating the bending and deformation of the heating device 10, and improving the assembling efficiency of the electrochemical device 100.

In an embodiment, the shell 20 includes a first wall 21, a second wall 22, a third wall 23, a fourth wall 24, a fifth wall 25, and a sixth wall 26. The first wall 21 is opposite to the third wall 23. The second wall 22 is opposite to the fourth wall 24. The fifth wall 25 is opposite to the sixth wall 26. The fifth wall 25 and the sixth wall 26 are both connected to the first wall 21, the second wall 22, the third wall 23, and the fourth wall 24.

In an embodiment, the cell assembly 30 includes a plurality of battery cells 31. The plurality of battery cells 31 are stacked together. A fourth direction P is a stacking direction of the plurality of battery cells 31. A part of the heat emitting bodies 11 are located between two adjacent battery cells 31, and connect the two battery cells 31. The heat emitting bodies 11 can heat the two battery cells 31 simultaneously, thereby improving the charge-discharge performance of the two battery cells 31.

In an embodiment, the conductive portion 12 is bent against the heat emitting bodies 11, so that the heating device 10 is bent at the conductive portion 12 and the clearance 14 region. In this way, a part of the heat emitting bodies 11 are located between two adjacent battery cells 31 to heat the two battery cells 31. At the same time, the heating device 10 is bent at the clearance 14 region, so that the clearance 14 region is located on a lateral side of the battery cells 31, thereby reducing the risk of overheating of the heat emitting bodies 11. The overheating of the heat emitting bodies 11 means that, when a heat emitting body 11 emits heat, the heat emitting body does not contact other objects to conduct the heat out, thereby resulting in heat accumulation on the heat emitting body 11 and being detrimental to the safety of the electrochemical device 100.

In an embodiment, the battery cell 31 includes a housing 311, an electrode assembly 312, and an electrode terminal 313. The electrode assembly 312 is disposed inside the housing 311. A part of the electrode terminal 313 is located inside the housing 311 and connected to the electrode assembly 312. A part of the electrode terminal 313 extends out of the housing 311.

In an embodiment, the battery cell 31 is a prismatic cell.

In an embodiment, the battery cell 31 is a cylindrical cell.

In an embodiment, the housing 311 includes a main portion 3111 and a sealing portion 3112 connected to each other. The sealing portion 3112 extending from the main portion 3111. The electrode assembly 312 is accommodated in the main portion 3111. The electrode terminal 313 extends out of the housing 311 from the sealing portion 3112.

In an embodiment, the sealing portion 3112 includes a top seal portion 31121 and a side seal portion 31122 connected to each other. The top seal portion 31121 is located at an end of the main portion 3111 along a fifth direction Q. The side seal portion 31122 is located at an end of the main portion 3111 along a sixth direction W. The electrode terminal 313 extends out of the housing 311 from the top seal portion 31121.

In an embodiment, the number of side seal portions 31122 is two. The two side seal portions 31122 are located at two opposite ends of the main portion 3111 along the sixth direction W. The top seal portion 31121 is located between the two side seal portions 31122 and connects the two side seal portions 31122. The sixth direction W is perpendicular to both the fourth direction P and the fifth direction Q.

In an embodiment, the electrode assembly 312 includes a positive electrode plate, a negative electrode plate, and a separator (not shown in the drawing). The separator is disposed between the positive electrode plate and the negative electrode plate. The positive electrode plate, the separator, and the negative electrode plate are wound or stacked to form an electrode assembly 312.

In an embodiment, the electrode terminal 313 includes a positive electrode terminal 3131 and a negative electrode terminal 3132. The positive electrode terminal 3131 is connected to the positive electrode plate, and the negative electrode terminal 3132 is connected to the negative electrode plate.

In an embodiment, the positive electrode terminal 3131 and the negative electrode terminal 3132 are located on the same side of the main portion 3111 along the fifth direction Q.

In an embodiment, the positive electrode terminal 3131 and the negative electrode terminal 3132 are located at two opposite ends, respectively, of the main portion 3111 along the fifth direction Q (not shown in the drawing).

The following further describes an example in which the positive electrode terminal 3131 and the negative electrode terminal 3132 are located on the same side of the main portion 3111 along the fifth direction Q.

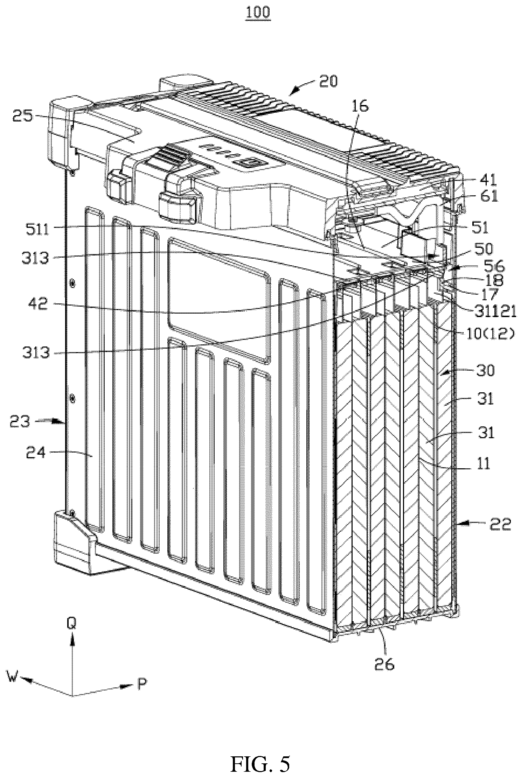

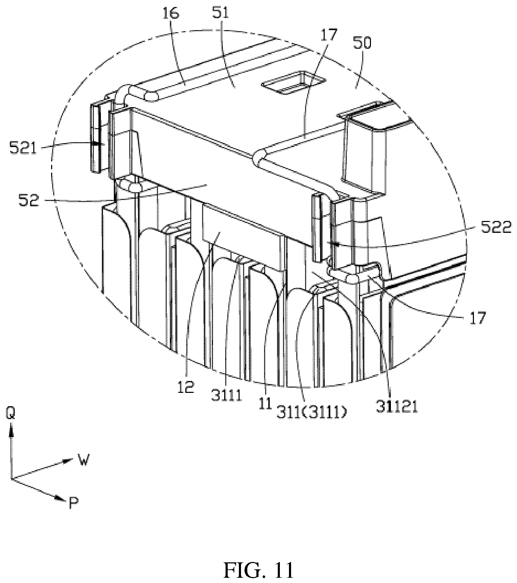

As shown in FIG. 5, FIG. 7, FIG. 10, and FIG. 11, in an embodiment, at least one heat emitting body 11 is located between two adjacent main portions 3111 along the fourth direction P, and connects the two main portions 3111. By being connected to the main portion 3111, the heat emitting bodies 11 can heat the main portion 3111 to improve the charge-and-discharge performance of the battery cell 31.

In an embodiment, along the fourth direction P, a projection of the heat emitting body 11 is located inside a projection of the main portion 3111, thereby making it convenient for the heat emitting body 11 to heat the main portion 3111.

In an embodiment, along the fourth direction P, the projection of the main portion 3111 is located inside the projection of the heat emitting body 11, thereby making it convenient for the heat emitting body 11 to heat all different parts of the main portion 3111, and improving the heating effect of the heating device 10 for the battery cell 31.

In an embodiment, the heat emitting body 11 is connected to the main portion 3111 by the first insulator 131 on the surface, thereby reducing the impact caused by the thickness of the heating device 10 onto the stacking thickness of the cell assembly 30.

In an embodiment, the electrochemical device 100 further includes a heat transfer medium (not shown in the drawing). The heat transfer medium is located between the first insulator 131 and the main portion 3111 on the surface of the heat emitting body 11, and connects the first insulator 131 and the main portion 3111. The heat transfer medium improves heat exchange between the heat emitting body 11 and the main portion 3111, and improves the heating effect of the heating device 10 for the battery cell 31. For example, the heat transfer medium may be a thermal adhesive.

In an embodiment, the conductive portion 12 and the main portion 3111 are separate from each other, and arranged along the fifth direction Q. Along the sixth direction W, the projection of the conductive portion 12 overlaps the projection of the top seal portion 31121. Along the fourth direction P, the two adjacent top seal portions 31121 are separate from each other. In this way, when the cell assembly 30 expands and deforms, the expansion and deformation mainly occurs in the main portion 3111 region. The conductive portion 12 is located in the top seal portion 31121 region, thereby reducing the impact caused by the expansion and deformation of the battery cell 31 onto the conductive portion 12, and reducing the risk of damage to the heating device 10 caused by the expansion of the battery cell 31.

In an embodiment, along the fourth direction P, a part of at least one conductive portion 12 is located between two adjacent top seal portions 31121.

In an embodiment, a protection piece (not shown in the drawing) is disposed on the conductive portion 12. At least a part of the protection piece is located between the conductive portion 12 and the shell 20. The protection piece plays a protective role, and reduces the risk of the conductive portion 12 being damaged by other structures. In an embodiment, the protection piece is bonded to the conductive portion 12, thereby improving the stability of connection between the protection piece and the conductive portion 12, and reducing the risk of detachment of the protection piece from the conductive portion 12. Optionally, the protection piece is a rubber pad or a silicone pad or adhesive tape, thereby reducing the impact of the self-weight on the electrochemical device 100.

As shown in FIG. 2, FIG. 6, and FIG. 7, in an embodiment, the number of second regions 112 is two. The first region 111 is located between the two second regions 112. The heating powers of the two second regions 112 are both less than the heating power of the first region 111. When operating in the electrochemical device 100, the heating device 10 heats up the center of the battery cell 31 through the first region 111, and heats up the edge parts on the two sides of the battery cell 31 through the two second regions 112, thereby facilitating uniform heating of all parts of the battery cell 31, and reducing the temperature difference between different parts of the battery cell 31. Optionally, a maximum heating temperature of the first region 111 is greater than a maximum heating temperature of the second region 112.

In an embodiment, the maximum heating temperature of the first region 111 is 120 °C. By setting the maximum heating temperature of the first region 111, the risk of thermal runaway of the battery cell 31 caused by the heating by the heating device 10 is reduced, and the safety performance of the electrochemical device 100 is improved.

In an embodiment, along the fourth direction P, the heating power varies between different heat emitting bodies 11, thereby making it convenient for the heating device 10 to heat up the pertinent battery cells 31 at different positions, and reducing the temperature difference between different battery cells 31.

In an embodiment, in a cell assembly 30 in which the battery cells are stacked together, the heat dissipation rate of the battery cell 31 near the center of the stack is less than the heat dissipation rate of the battery cell 31 away from the center of the stack. Along the fourth direction P, the heating power of the heat emitting body 11 away from the center of the stack is greater than the heating power of the heat emitting body 11 near the center of the stack, thereby favorably achieving a uniform heating rate for different battery cells 31, and reducing the temperature difference between different battery cells 31.

In an embodiment, along the fifth direction Q, an end, close to the sixth wall 26, of the battery cell 31, is flush with an end, close to the sixth wall 26, of the heating device 10, thereby facilitating assembling of the heating device 10 and the cell assembly 30.

As shown in FIG. 5, FIG. 6, and FIG. 11, in an embodiment, the heating device 10 further includes a first connecting end 16 and a second connecting end 17. The first connecting end 16 and the second connecting end 17 is configured to be electrically connected to a power supply, so as to provide electrical energy to the heat emitting body 11.

In an embodiment, the electrochemical device 100 further includes a first circuit board 41. The first circuit board 41 is located inside the shell 20, and connected to the fifth wall 25. The first circuit board 41 and the cell assembly 30 are arranged along the fifth direction Q, and the first circuit board 41 electrically connects the battery cells 31 in the cell assembly 30 and the heating device 10. The fifth direction Q is perpendicular to the fourth direction P.

In an embodiment, the first circuit board 41 is configured to control charging and discharging of the cell assembly 30. In an embodiment, the first circuit board 41 includes a BMS assembly (Battery Management System). The BMS assembly includes a plurality of electronic components. The plurality of electronic components can implement functions such as data collection, control, protection, communication, SOC calculation, signal transmission, and power transmission for the battery cell 31.

In an embodiment, the first circuit board 41 includes a printed circuit board (PCB, Printed Circuit Board).

In an embodiment, the first circuit board 41 includes a flexible circuit board (FPC, Flexible Printed Circuit).

In an embodiment, the first circuit board 41 is configured to be able to provide a path of electrical energy to the heating device 10, and enable the heat emitting bodies 11 of the heating device 10 to emit heat and heat up the battery cell 31.

In an embodiment, the first connecting end 16 connects the heat emitting body 11 and the first circuit board 41. The second connecting end 17 connects the heat emitting body 11 and the first circuit board 41. In this way, the first circuit board 41 is electrically connected to the heat emitting body 11, the cell assembly 30 is controlled by the first circuit board 41, and the cell assembly 30 provides electrical energy to the heat emitting body 11.

In an embodiment, the first connecting end 16 and the second connecting end 17 are both electrically connected to an external power supply. The external power supply provides electrical energy to the heat emitting body 11, thereby reducing the impact caused by the operating energy consumption of the heating device 10 onto the electrochemical device 100.

In an embodiment, a plurality of heat emitting bodies 11 are electrically connected in sequence by a plurality of conductive portions 12. The first connecting end 16 is connected to the heat emitting body 11 at the start end, and the second connecting end 17 is connected to the heat emitting body 11 at the tail end.

In an embodiment, the first connecting end 16 is a conducting wire. In an embodiment, the first connecting end 16 is a metal piece of good conductivity, such as copper.

In an embodiment, the second connecting end 17 is a conducting wire. In an embodiment, the second connecting end 17 is a metal piece of good conductivity, such as copper.

In an embodiment, the electrochemical device 100 further includes a third insulator 50. The cell assembly 30, the third insulator 50, and the first circuit board 41 are arranged along the fifth direction Q. The third insulator 50 serves an insulating function and reduces the risk of a short circuit between the cell assembly 30 and the first circuit board 41.

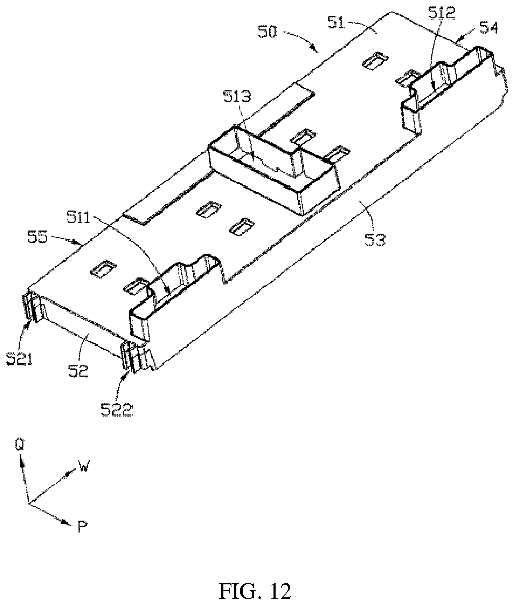

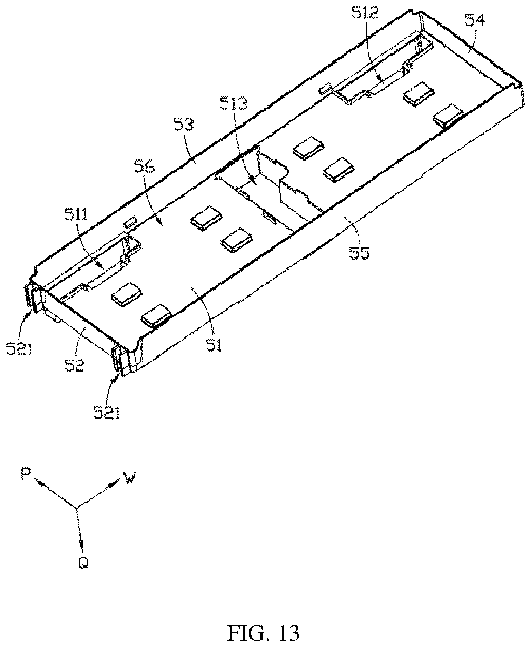

As shown in FIG. 5, FIG. 12, and FIG. 13, in an embodiment, the third insulator 50 includes a bottom wall 51 and a plurality of sidewalls. The main portion 3111 and the bottom wall 51 are arranged along the fifth direction Q. The sidewalls are connected to the bottom wall 51, and extend toward the main portion 3111. The bottom wall 51 and the plurality of sidewalls form an accommodation cavity 56. An opening of the accommodation cavity 56 is facing toward the main portion 3111. A part of the electrode terminal 313extending out of the top seal portion 31121 is located in the accommodation cavity 56.

In an embodiment, the top seal portion 31121 is partially located inside the accommodation cavity 56. The third insulator 50 can provide protection for the top seal portion 31121, and reduce the risk of damaging the top seal portion 31121. In an embodiment, the first connecting end 16 is partially located inside the accommodation cavity 56, and partially extends to a side of the bottom wall 51, the side being facing away from the main portion 3111. In an embodiment, the third insulator 50 can provide protection for the first connecting end 16, and reduce the risk of damaging the first connecting end 16. In an embodiment, the second connecting end 17 is partially located inside the accommodation cavity 56, and partially extends to a side of the bottom wall 51, the side being facing away from the main portion 3111. In an embodiment, the third insulator 50 can provide protection for the second connecting end 17, and reduce the risk of damaging the second connecting end 17.

In an embodiment, the sidewalls include a first sidewall 52, a second sidewall 53, a third sidewall 54, and a fourth sidewall 55. The first sidewall 52 and the third sidewall 54 are arranged opposite to each other along the sixth direction W, and the fourth sidewall 55 and the second sidewall 53 are arranged opposite to each other along the fourth direction P. The first sidewall 52, the second sidewall 53, the third sidewall 54, and the fourth sidewall 55 are all connected to the bottom wall 51 to form an accommodation cavity 56.

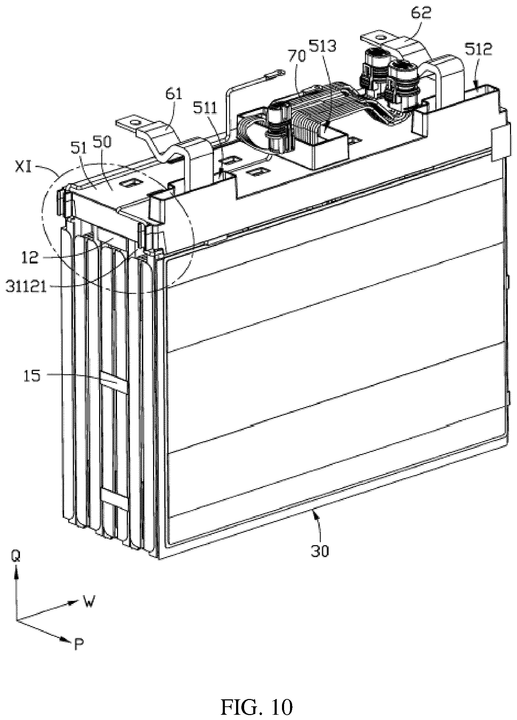

As shown in FIG. 10 to FIG. 13, in an embodiment, a first snap slot 521 is disposed on a side of the first sidewall 52, the side being facing away from the accommodation cavity 56. A part of the first connecting end 16 is disposed in the first snap slot 521. The first snap slot 521 serves to fix and constrain the first connecting end 16, thereby reducing the risk of damage caused by a wobble of the first connecting end 16.

In an embodiment, the first snap slot 521 extends along the fifth direction Q, thereby improving the constraint effect of the first snap slot on the first connecting end 16, and further reducing the risk of damage caused by the wobble of the first connecting end 16.

In an embodiment, a second snap slot 522 is disposed on a side of the first sidewall 52, the side being facing away from the accommodation cavity 56. A part of the second connecting end 17 is disposed in the second snap slot 522. The second snap slot 522 serves to fix and constrain the second connecting end 17, thereby reducing the risk of damage caused by the wobble of the second connecting end 17.

In an embodiment, the second snap slot 522 extends along the fifth direction Q, thereby improving the constraint effect of the second snap slot on the second connecting end 17, and further reducing the risk of damage caused by the wobble of the second connecting end 17.

In other embodiments, the second snap slot 522 is disposed on the second sidewall 53 or the third sidewall 54 or the fourth sidewall 55 (not shown in the drawing).

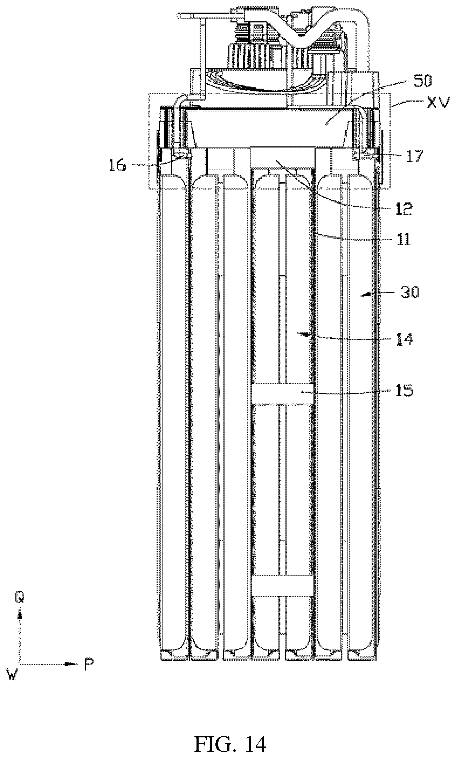

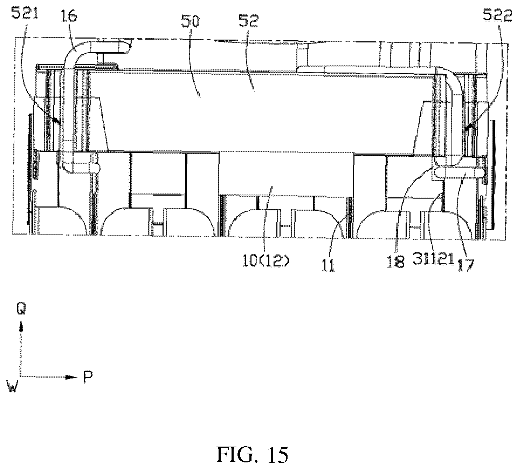

As shown in FIG. 5, FIG. 11, FIG. 14, and FIG. 15, in an embodiment, the heating device 10 further includes a control switch 18. The control switch 18 is connected to the first connecting end 16 or the second connecting end 17. The control switch 18 can control a closed circuit or broken circuit of the heating device 10. Optionally, the control switch 18 is connected to the second connecting end 17. By controlling the closed or broken circuit of the second connecting end 17, the control switch controls the closed or broken circuit of the heating device 10.

In an embodiment, the control switch 18 is connected to the electrode terminal 313. The control switch 18 is configured to be able to detect a temperature of the electrode terminal 313, and break the circuit of the heating device 10 when the temperature is higher than a preset temperature, thereby reducing the risk of thermal runaway of the battery cell 31. In an embodiment, the preset temperature is 80 °C.

In an embodiment, the control switch 18 is disposed in an region of the electrode terminal 313, the region being close to the top seal portion 31121, thereby improving the accuracy of detection of the temperature of the electrode terminal 313 by the control switch 18, and reducing the risk of thermal runaway of the battery cell 31.

In an embodiment, along the fourth direction P, the control switch 18 disposed at the top seal portion 31121 of the outermost battery cell 31, thereby reducing the risk of thermal runaway of the battery cell 31.

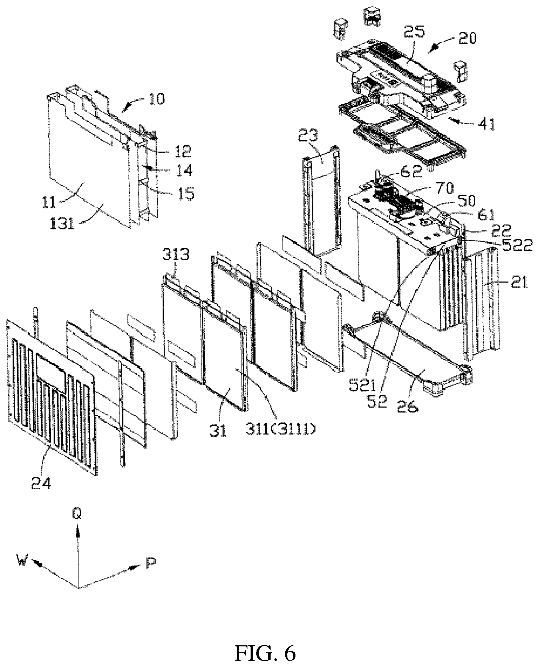

As shown in FIG. 6, FIG. 10, and FIG. 12, in an embodiment, the electrochemical device 100 further includes a main positive connecting portion 61 and a main negative connecting portion 62. The main positive connecting portion 61 connects the cell assembly 30 and the first circuit board 41. The main negative connecting portion 62 connects the cell assembly 30 and the first circuit board 41. In this way, the first circuit board 41 can electrically connect all battery cells 31, so as to control charging and discharging of the battery cells 31.

In an embodiment, the main positive connecting portion 61 is partially located inside the accommodation cavity 56, and partially extends to a side of the bottom wall 51, the side being facing away from the main portion 3111. In an embodiment, the third insulator 50 can provide protection for the main positive connecting portion 61, and reduce the risk of damaging the main positive connecting portion 61.

In an embodiment, the main negative connecting portion 62 is partially located inside the accommodation cavity 56, and partially extends to a side of the bottom wall 51, the side being facing away from the main portion 3111. In an embodiment, the third insulator 50 can provide protection for the main negative connecting portion 62, and reduce the risk of damaging the main negative connecting portion 62.

In an embodiment, the bottom wall 51 is provided with a first through-hole 511. The main positive connecting portion 61 partially passes through the first through-hole 511.

In an embodiment, the electrochemical device 100 further includes a first filler. At least a part of the first filler is located inside the first through-hole 511, and connected to the main positive connecting portion 61. The first filler serves a filling and fixing function to improve the stability of connection between the main positive connecting portion 61 and the first through-hole 511, and reduce the risk of moving relative to the third insulator 50 by the main positive connecting portion 61.

In an embodiment, the first filler includes, but is not limited to, sealant, styrofoam, and foam.

In an embodiment, the bottom wall 51 is provided with a second through-hole 512. The main negative connecting portion 62 partially passes through the second through-hole 512.

In an embodiment, the electrochemical device 100 further includes a second filler. At least a part of the second filler is located inside the second through-hole 512, and connected to the main negative connecting portion 62. The second filler serves a filling and fixing function to improve the stability of connection between the main negative connecting portion 62 and the second through-hole 512, and reduce the risk of moving relative to the third insulator 50 by the main negative connecting portion 62.

In an embodiment, the second filler includes, but is not limited to, sealant, styrofoam, and foam.

As shown in FIG. 5, in an embodiment, the electrochemical device 100 further includes a second circuit board 42. The second circuit board 42 is disposed in the accommodation cavity 56, and electrically connected to the electrode terminal 313. The second circuit board 42 can obtain electrical signal information of the battery cell 31 through the electrode terminal 313. For example, the electrical signal information includes, but is not limited to, voltage, current, and temperature.

In an embodiment, the second circuit board 42 electrically connects all electrode terminals 313, so as to obtain electrical signal information of all the battery cells 31 in the cell assembly 30 through all the electrode terminals 313.

In an embodiment, the second circuit board 42 is electrically connected to the first circuit board 41. The first circuit board 41 obtains the electrical signal information of the battery cell 31 through the second circuit board 42.

In an embodiment, the second circuit board 42 includes a printed circuit board (PCB).

In an embodiment, the second circuit board 42 includes a flexible circuit board (FPC, Flexible Printed Circuit).

As shown in FIG. 6, FIG. 10, and FIG. 12, the electrochemical device 100 further includes a harness 70. A part of the harness 70 is located inside the accommodation cavity 56 and connected to the second circuit board 42. A part of the harness 70 extends to a side of the bottom wall 51 and is connected to the first circuit board 41, the side being facing away from the main portion 3111. In this way, the first circuit board 41 is electrically connected to the second circuit board 42 to serve a function of transmitting electrical signals, so that the first circuit board 41 can obtain electrical signal information of the battery cell 31 from the second circuit board 42. In an embodiment, the third insulator 50 can provide protection for the harness 70, and reduce the risk of damaging the harness 70.

In an embodiment, the bottom wall 51 is provided with a third through-hole 513. The harness 70 partially passes through the third through-hole 513.

In an embodiment, the electrochemical device 100 further includes a third filler. At least a part of the third filler is located inside the third through-hole 513, and connected to the harness 70. The third filler serves a filling and fixing function to improve the stability of connection between the harness 70 and the third through-hole 513, and reduce the risk of moving relative to the third insulator 50 by the harness 70, and in turn, reduce the risk of poor contact of the first circuit board 41 or the second circuit board 42.

In an embodiment, the third filler includes, but is not limited to, sealant, styrofoam, and foam.

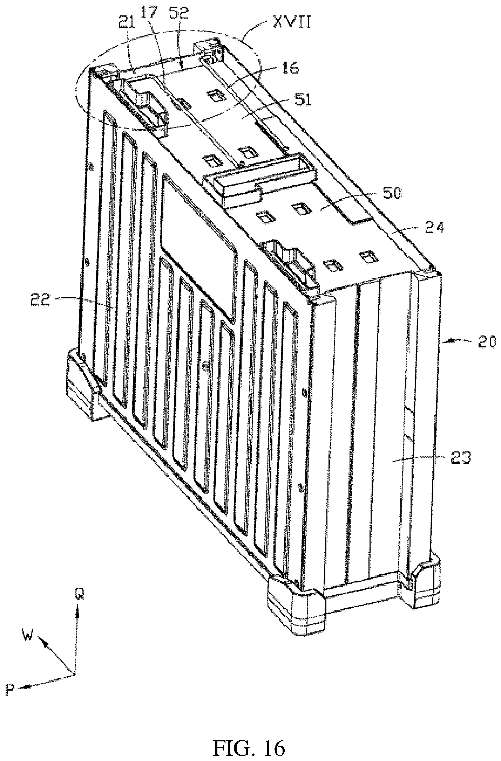

As shown in FIG. 6, FIG. 16, and FIG. 17, in an embodiment, the first wall 21 and the first sidewall 52 are arranged along the sixth direction W, the second sidewall 53 and the second wall 22 are arranged along the fourth direction P, the third sidewall 54 and the third wall 23 are arranged along the sixth direction W, and the fourth wall 24 and the fourth sidewall 55 are arranged along the fourth direction P.

In an embodiment, the first wall 21 is provided with a first groove 211. At least a part of the first snap slot 521 is located in the first groove 211. The first connecting end 16 is partially located in the first groove 211 and extends out of the first groove 211. The first groove 211 serves a function of avoidance, reduces the risk of interference between the first wall 21 and the first snap slot 521, and improves the space utilization rate of the electrochemical device 100.

In an embodiment, the first wall 21 is provided with a second groove 212. At least a part of the second snap slot 522 is located in the second groove 212. The second connecting end 17 is partially located in the second groove 212 and extends out of the second groove 212. The second groove 212 serves a function of avoidance, reduces the risk of interference between the first wall 21 and the second snap slot 522, and improves the space utilization rate of the electrochemical device 100.

To sum up, in the electrochemical device 100 of this application, a plurality of heat emitting bodies 11 in the heating device 10 are spaced apart along the first direction X, and a clearance 14 is formed, thereby facilitating bending and deformation of the heating device 10 in a clearance 14 region between the adjacent heat emitting bodies 11. The conductive portion 12 that connects the two adjacent heat emitting bodies 11 is separate from the clearance 14, thereby further facilitating the bending and deformation of the heating device 10, and improving the assembling efficiency of the electrochemical device 100.

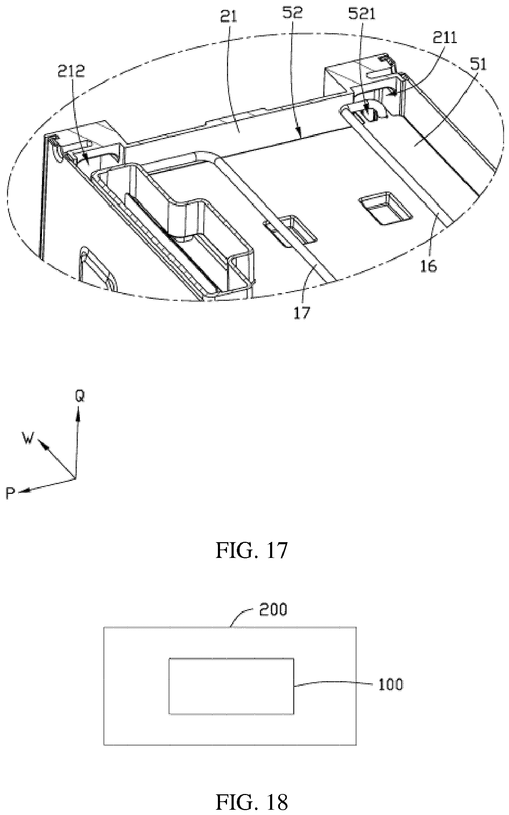

As shown in FIG. 18, an embodiment of this application further provides an electrical device 200, including the electrochemical device 100 according to any one of the foregoing embodiments.

In the electrical device 200, a plurality of heat emitting bodies 11 in the heating device 10 in the electrochemical device 100 are spaced apart along the first direction X, and a clearance 14 is formed, thereby facilitating bending and deformation of the heating device 10 in a clearance 14 region between the adjacent heat emitting bodies 11. The conductive portion 12 that connects the two adjacent heat emitting bodies 11 is separate from the clearance 14, thereby further facilitating the bending and deformation of the heating device 10, improving the assembling efficiency of the electrochemical device 100, saving the manufacturing cost of the electrochemical device 100, and reducing the impact caused by the cost of the electrochemical device 100 onto the electrical device 200.

In an embodiment, the electrochemical device 100 can provide electrical energy to the electrical device 200.

In an embodiment, the electrical device 200 includes, but is not limited to, any one of an unmanned aerial vehicle, an electric two-wheeler, an electric tool, or a robot.

In addition, a person skilled in the art may make other variations to this application without departing from the essence of this application. The variations made based on the essence of this application still fall within the protection scope of this application.

## Claims

1. A heating device (10), comprising:
at least two heat emitting bodies (11), spaced apart along a first direction (X), with a clearance (14) provided between two adjacent heat emitting bodies (11);
wherein the two adjacent heat emitting bodies (11) are connected by a conductive portion (12), and the conductive portion (12) is separate from the clearance (14); and
an insulator (13), overlaying at least a part of a surface of each heat emitting body (11).

2. The heating device (10) according to claim 1, wherein the two adjacent heat emitting bodies (11) are connected by an insulating connecting portion (15), and the insulating connecting portion (15) is located between the two adjacent heat emitting bodies (11).

3. The heating device (10) according to claim 2, wherein the insulating connecting portion (15) is disposed on the insulator (13).

4. The heating device (10) according to claim 2 or 3, wherein the insulating connecting portion (15) and the insulator (13) are formed in one piece.

5. The heating device (10) according to any one of claims 1 to 4, wherein the insulator (13) comprises:
a first insulator (131), overlaying an entire surface of the each heat emitting body (11); and
a second insulator (132), overlaying an entire surface of the conductive portion (12).

6. An electrochemical device (100), wherein the electrochemical device (100) comprises:
a cell assembly (30), and the heating device (10) according to any one of claims 1 to 5, wherein the heating device (10) is connected to the cell assembly (30).

7. The electrochemical device (100) according to claim 6, wherein the cell assembly (30) comprises a plurality of battery cells (31); each of the battery cells (31) comprises a housing (311), an electrode assembly (312), and an electrode terminal (313); a first part of the electrode terminal (313) is located in the housing (311) and connected to the electrode assembly (312); a second part of the electrode terminal (313) extends out of the housing (311);
the housing (311) comprises a main portion (3111); and the electrode assembly (312) is accommodated in the main portion (3111);
the at least two heat emitting bodies (11) are connected to the main portion (3111), and the conductive portion (12) is separate from the main portion (3111); and
the conductive portion (12) is bent against the heat emitting bodies (11).

8. The electrochemical device (100) according to claim 7, wherein
the battery cell (31) further comprises a sealing portion (3112) extending from the main portion (3111), and the electrode terminal (313) extends out of the main portion (3111) from the sealing portion (3112); and
the plurality of battery cells (31) are stacked together; along a stacking direction of the plurality of battery cells (31), a part of at least one heat emitting body (11) is located between adjacent main portions (3111), and a part of at least one conductive portion (12) is located between adjacent sealing portions (3112).

9. The electrochemical device (100) according to claim 8, wherein the heating device (10) further comprises:
a first connecting end (16) electrically connected to the heat emitting bodies (11);
a second connecting end (17) electrically connected to the heat emitting bodies (11); and
a control switch (18) connected to the first connecting end (16) or the second connecting end (17), and the control switch (18) is configured to detect a temperature of the electrode terminal (313); wherein
along the stacking direction of the plurality of battery cells (31), the control switch (18) is connected to an electrode terminal (313) on an outermost battery cell (31).

10. The electrochemical device (100) according to claim 8 or 9, wherein
the electrochemical device (100) further comprises a third insulator (50), the third insulator (50) comprises a bottom wall (51) and a plurality of sidewalls, the plurality of sidewalls are connected to the bottom wall (51), the bottom wall (51) and the plurality of sidewalls form an accommodation cavity (56), an opening of the accommodation cavity (56) is facing toward the main portion (3111); and a part of the electrode terminal (313) extending out of the sealing portion (3112), is located in the accommodation cavity (56);
a first snap slot (521) is disposed on a side of the plurality of sidewalls, the side being facing away from the accommodation cavity (56); and
the heating device (10) further comprises a first connecting end (16) connected to the heat emitting bodies (11), and the first connecting end (16) is disposed in the first snap slot (521) and extends to a side of the bottom wall (51), the side being facing away from the main portion (3111).

11. The electrochemical device (100) according to claim 10, wherein the electrochemical device (100) further comprises a first circuit board (41), the first connecting end (16) is connected to the first circuit board (41), and the first circuit board (41) is configured to provide a path of electrical energy to the heating device (10).

12. The electrochemical device (100) according to claim 10 or 11, wherein the electrochemical device (100) further comprises a second circuit board (42), the second circuit board (42) is disposed in the accommodation cavity (56) and connected to the electrode terminal (313); and
the second circuit board (42) is configured to obtain electrical signal information of the battery cell (31).

13. The electrochemical device (100) according to any one of claims 8 to 12, wherein the sealing portion (3112) comprises a top seal portion (31121) and a side seal portion (31122) connected to each other; the top seal portion (31121) is located at an end of the main portion (3111) along a fifth direction (Q); the side seal portion (31122) is located at an end of the main portion (3111) along a sixth direction (W); the electrode terminal (313) protrudes out of the housing 311 from the top seal portion (31121);
a part of at least one conductive portion (12) is located between adjacent side seal portions (31122).

14. The electrochemical device (100) according to claim 13, wherein along the sixth direction (W), the clearance (14) region is located on a lateral side of the side seal portion (31122).

15. An electrical device (200), wherein the electrical device (200) comprises the electrochemical device (100) according to any one of claims 6 to 14.
